# FASCICULE DE BREVET EUROPEEN

(11) **EP 3 140 032 B1**
(45) Date de publication et mention de la délivrance du brevet: **29.08.2018**
(21) Numéro de dépôt: 15725817.9
(22) Date de dépôt: 28.04.2015
(51) Int. Cl.: B01J 8/24, B05B 7/04

(54) **DISPOSITIF D'INJECTION, NOTAMMENT POUR INJECTER UNE CHARGE D'HYDROCARBURES DANS UNE UNITÉ DE RAFFINAGE.**
INJEKTIONSVORRICHTUNG, INSBESONDERE ZUM INJIZIEREN EINES KOHLENWASSERSTOFFAUSGANGSMATERIALS IN EINE RAFFINIEREINHEIT
INJECTION DEVICE, IN PARTICULAR FOR INJECTING A HYDROCARBON FEEDSTOCK INTO A REFINING UNIT.

(30) Priorité: 05.05.2014 FR 1454040
(43) Date de publication de la demande: 15.03.2017
(73) Titulaire: Total Raffinage Chimie, 92400 Courbevoie (FR)
(72) Inventeur: LESAGE, Romain, 76290 Montivilliers (FR)
(74) Mandataire: Raboin, Jean-Christophe
(86) Numéro de dépôt international: PCT/FR2015/051152
(87) Numéro de publication internationale: WO 2015/170039

(56) Documents cités:
- EP-A1- 0 312 428
- EP-A1- 0 318 185
- US-A1- 2001 042 703
- US-A1- 2012 063 961

## Description

La présente invention se rapporte à un dispositif d'injection, notamment un dispositif d'injection de charge d'hydrocarbures d'une unité de raffinage, en particulier une unité de craquage catalytique fluide (FCC « Fluid Catalytic Cracking » en anglais).

Les charges d'hydrocarbures liquides traitées dans les unités de raffinage sont généralement mises en contact avec un catalyseur solide qui va favoriser la ou les réactions chimiques de traitement de la charge. Afin d'améliorer ce contact et de maximiser le rendement des réactions, ces charges d'hydrocarbure liquides sont atomisées en fines gouttelettes par des dispositifs d'injection. Cette d'atomisation permet de maximiser la surface de contact liquide (charge d'hydrocarbure liquide) -solide (catalyseur), ce qui favorise le transfert de chaleur et contribue à la répartition homogène des hydrocarbures à l'intérieur de la zone réactionnelle. Bien qu'il n'existe pas de réel consensus concernant le diamètre optimum des gouttelettes, on recherche en général à former des gouttelettes dont le diamètre est du même ordre de grandeur que le diamètre des particules de catalyseur, à savoir moins de 200 microns, par exemple de l'ordre de 50 à 80 microns.

De manière générale, on utilise des dispositifs d'injection dits « diphasiques », lesquels présentent un corps cylindrique creux et deux ouvertures d'entrée par lesquelles on injecte respectivement la charge d'hydrocarbure liquide et un gaz d'atomisation, généralement de la vapeur d'eau, à l'intérieur dudit corps. Une chambre de contact est ménagée à l'intérieur du corps, dans laquelle on met en contact la charge d'hydrocarbure et le gaz d'atomisation pour atomiser la charge d'hydrocarbure. Une fois atomisée, la charge d'hydrocarbure est éjectée via une ouverture de sortie débouchant à l'intérieur du réacteur.

Chaque dispositif d'injection est implanté sur une paroi de réacteur de manière à ce qu'une extrémité du dispositif d'injection comprenant l'ouverture de sortie soit située à l'intérieur du réacteur.

On connait notamment des dispositifs d'injection à venturi dans lesquels la charge est propulsée au travers d'un venturi en combinaison avec un gaz d'atomisation, engendrant la formation de gouttelettes. Ledit gaz d'atomisation circulant axialement permet d'entrainer ces gouttelettes en les divisant davantage vers la sortie du corps. EP-A-0 318 185 décrit un dispositif d'injection pour un réacteur de craquage catalytique. Il existe un besoin pour un dispositif d'injection permettant de concilier simplicité, faible perte de charge et qualité d'atomisation.

Il est proposé un dispositif d'injection conformé pour atomiser un liquide en gouttelettes au moyen d'un gaz, comprenant :
- un corps comprenant des parois définissant un évidement s'étendant axialement de façon à déboucher d'une part vers un orifice d'entrée de gaz à une extrémité du dispositif d'injection et d'autre part vers un orifice de sortie de liquide atomisé à l'autre extrémité du dispositif d'injection, et un orifice d'entrée de liquide étant ménagé dans ces parois, cet orifice d'entrée de liquide s'étendant suivant une composante radiale de façon à déboucher d'une part sur l'extérieur du corps et d'autre part sur l'évidement,
- un ensemble d'injection de gaz dans lequel est défini un passage pour la circulation de gaz entre l'orifice d'entrée de gaz et un orifice de sortie de gaz situé à l'intérieur de l'évidement,
dans lequel
- les parois du corps définissent un étranglement dont le col est en aval de l'orifice de sortie de gaz,
- l'ensemble d'injection de gaz définit avec les parois un espace pour la circulation de liquide de l'orifice d'entrée de liquide vers le col de l'étranglement, et
- le dispositif d'injection est agencé de sorte que le flux de gaz issu de l'orifice de sortie de gaz couvre une portion de paroi dans un proche voisinage du col de l'étranglement.

Il a été observé qu'en associant un col d'étranglement à un flux de gaz sur ce col ou très près de ce col, il était possible d'obtenir une atomisation relativement bonne en termes de diamètres de gouttelettes, et ce avec une perte de charge relativement faible. Il est possible que le film liquide passant à proximité du col de l'étranglement soit cisaillé par le flux de gaz issu de l'ensemble d'injection des gaz, provoquant ainsi l'atomisation du liquide en gouttelettes.

La portion de paroi dans le proche voisinage du col peut inclure :
- une portion de paroi en amont du col, s'étendant jusqu'au col ou non, et/ou
- une portion de paroi en aval du col, s'étendant jusqu'au col ou non.

Par « proche voisinage du col », on entend des très faibles distances par rapport au col, par exemple des distances inférieures à 5% du diamètre maximal du corps, avantageusement inférieures à 1% de ce diamètre, éventuellement inférieures à 0,1% de ce diamètre.

Avantageusement, le col peut être compris dans la portion de paroi couverte par le flux de gaz.

Par « étranglement » on entend un rétrécissement de la section de l'évidement jusqu'à un col. En aval du col, la section peut rester constante, à la valeur de minima (au moins local) atteinte au niveau du col, ou augmenter à nouveau.

Par « col d'étranglement », on entend un minimum, en termes de distance entre la paroi et un axe central du corps, de l'étranglement. Dit autrement, le col constitue une extrémité de l'étranglement.

Au niveau de l'étranglement, les parois peuvent s'étendre suivant une composante radiale jusqu'au col. Pour un col circonscrit dans un plan normal à la direction axiale, le diamètre de section de l'évidement peut ainsi atteindre un minimum au niveau du col.

Le diamètre de la section de l'évidement en aval du col peut rester identique ou sensiblement identique à la valeur minimale atteinte au niveau du col. On pourra ainsi prévoir une portion, dite cylindrique, en aval du col et s'étendant jusqu'au col, dans laquelle est ménagé un conduit de forme cylindrique.

Dans ce cas, le conduit cylindrique peut avantageusement s'étendre axialement sur une longueur de valeur au moins quatre fois, avantageusement au moins cinq fois, plus élevée que la valeur d'un diamètre de la section de ce conduit. De façon surprenante, cet agencement semble permettre d'obtenir des performances améliorées.

Alternativement, le diamètre de la section de l'évidement en aval du col peut être plus élevé qu'au niveau du col. Les parois au niveau de l'étranglement peuvent par exemple définir un bourrelet s'étendant suivant une composante radiale jusqu'au col.

Le col peut définir une ligne de bord vif, c'est-à-dire que la dérivée, par rapport à la position axiale, de la distance entre la ligne axiale centrée du corps et les parois internes du corps est discontinue au niveau du col.

Alternativement, les parois peuvent être conformées que cette dérivée reste continue. Les parois peuvent par exemple définir un étranglement avec un bord d'extrémité relativement arrondi.

Le col peut être fermé, par exemple le col peut avoir une forme circulaire ou elliptique.

Par exemple, une ligne de bord vif peut être circonscrite dans un plan, ou non. Lorsque la ligne de bord vif est dans un plan, ce plan peut être normal à l'axe du corps, ou non. On pourra par exemple prévoir que la ligne de bord vif soit dans un plan incliné par rapport à l'axe du corps.

Alternativement, le col peut être ouvert. Par exemple, le col peut définir une ligne non fermée, s'étendant de façon hélicoïdale à l'intérieur du corps et présentant une ou plusieurs spires. On peut aussi prévoir un ensemble de lignes non fermées s'étendant de façon hélicoïdale et présentant une ou plusieurs spires.

Dans un mode de réalisation, le col peut définir un segment, par exemple une ligne de bord vif, s'étendant transversalement de façon rectiligne.

Le corps peut être réalisé en une ou plusieurs pièces.

Le liquide peut comprendre essentiellement une charge d'hydrocarbures, ou autre.

Le gaz peut comprendre essentiellement de la vapeur d'eau, ou autre.

Au niveau de l'étranglement, la section de l'évidement est plus faible que sur une portion du corps immédiatement en amont de l'étranglement.

La section de l'évidement en amont du col peut varier continûment jusqu'au col. On peut par exemple prévoir des parois formant une portion de surface sphérique, ou une portion de surface conique. L'étranglement peut par exemple définir un volume représentant une portion d'hyperboloïde, une portion de sphère ou une portion de cône, en amont d'une ligne de bord vif ou d'une extrémité arrondie.

Alternativement, la section de l'évidement en amont du col peut présenter des discontinuités. On peut par exemple prévoir un corps dont les parois présentent une nervure sans arrondi à la jonction entre la base de la nervure et par exemple des parois par exemple cylindriques du corps.

Dans un mode de réalisation avantageux, l'orifice de sortie de gaz est une fente en regard du col, de sorte que le flux de gaz est circonscrit dans le proche voisinage du col. Cet agencement peut permettre de limiter la quantité de gaz injecté dans le dispositif d'injection.

La fente peut avoir une forme similaire à la forme définie par le col, par exemple une forme circulaire pour un col circulaire, ou une forme rectiligne pour un col définissant un segment s'étendant transversalement

La largeur de la fente peut ainsi être relativement faible, par exemple inférieure à 5% du diamètre maximal du corps, avantageusement inférieure à 1% de ce diamètre, éventuellement inférieure à 0,1% de ce diamètre. La largeur de la fente peut par exemple varier entre 0,1 millimètres et 10 millimètres, avantageusement entre 0,5 millimètres et 5 millimètres, avantageusement entre 1 et 2 millimètres.

L'invention n'est en rien limitée à des orifices de sortie de gaz formant des fentes. On pourrait tout à fait prévoir plusieurs orifices de très petite taille, ayant par exemple des sections circulaires, chacun de ces orifices étant orienté de sorte que le flux de gaz issu de cet orifice aboutisse dans un proche voisinage du col.

Avantageusement, l'ensemble d'injection de gaz peut comprendre un tube et un élément de tige reçu dans ce tube, cet élément de tige s'étendant longitudinalement à l'intérieur du tube de sorte que le passage pour la circulation de gaz soit entre ledit élément de tige et ledit tube. On utilise un tel principe d'enveloppe double, concentrique, pour réaliser un passage et un orifice de sortie de gaz formant une fente d'épaisseur relativement faible.

L'invention n'est en rien limitée à cette utilisation du principe d'une enveloppe double, même s'il est avantageux en ce sens que relativement facile à réaliser. On pourrait par exemple prévoir un conduit dont la section évolue le long du passage pour la circulation de gaz, d'une section circulaire à proximité de l'orifice d'entrée de gaz jusqu'à une section par exemple en forme de fente, par exemple circulaire ou rectiligne. On pourrait alternativement prévoir que l'ensemble d'injection de gaz définisse des embranchements, de sorte que le gaz entrant via l'orifice d'entrée de gaz se répartisse entre plusieurs conduits de type capillaires, débouchant chacun à proximité du col.

Avantageusement, au moins l'un parmi l'élément de tige et le tube peut être conformé de sorte que l'épaisseur du passage pour la circulation de gaz subisse un rétrécissement afin d'accélérer la vitesse du gaz entre l'entrée de gaz et la sortie de gaz. L'épaisseur du passage peut ainsi être plus élevée en amont de l'orifice de sortie de gaz qu'au niveau de cet orifice, par exemple entre 5 millimètres et 5 centimètres, par exemple de l'ordre de 1 centimètre.

Avantageusement, l'élément de tige et le tube peuvent être centrés l'un par rapport à l'autre, de sorte qu'une section radiale de l'ensemble tige et tube présente une distance constante entre la surface de la tige et la surface intérieure du tube, quel que soit le rayon considéré.

Avantageusement, l'évidement peut présenter un léger évasement en aval de l'étranglement, de sorte que le diamètre de la section de l'évidement augmente très légèrement, sur cette portion de l'évidement correspondant à l'évasement, au fur et à mesure que la distance par rapport à au col s'accroit. On pourra par exemple prévoir un angle compris entre 1° et 5° par rapport à la direction axiale, avantageusement de 3,5°. De façon surprenante, il semble que cette géométrie permette de limiter les décollements de fluide.

Par « ligne axiale », on entend une ligne qui s'étend parallèlement à la direction axiale du corps du dispositif d'injection.

L'invention concerne également un réacteur de traitement d'une charge d'hydrocarbure, notamment de craquage catalytique, comprenant au moins un dispositif d'injection tel que décrit ci-dessus et disposé de sorte que son orifice de sortie de liquide atomisé débouche à l'intérieur du réacteur.

L'invention concerne en outre un procédé de craquage catalytique d'une charge d'hydrocarbures dans un réacteur, dans lequel on injecte, de préférence en continu, la charge d'hydrocarbures à l'intérieur de ce réacteur, cette charge d'hydrocarbures étant injectée par un conduit d'entrée de liquide raccordé à un orifice d'entrée de liquide d'un dispositif d'injection tel que décrit ci-dessus, un gaz alimentant simultanément le dispositif d'injection par l'orifice d'entrée de gaz.

La charge d'hydrocarbures peut être injectée à l'état liquide, à une température allant de la température ambiante à 500°C, par exemple de 80°C à 300°C, mais plus généralement de 200 à 300°C. La charge d'hydrocarbure peut être injectée à une pression de l'ordre de 6 à 8 bars. Plus généralement, la différence entre la pression d'entrée de la charge et la pression en sortie de l'injecteur (delta P) peut être comprise entre 0,8 et 5 bars.

Le gaz utilisé peut être de la vapeur d'eau, ou tout autre gaz approprié, tel que par exemple un effluent gazeux résultant de la conversion d'hydrocarbures, des oléfines légères ou un mélange de ces gaz, un gaz de raffinerie ou de l'azote.

Avantageusement, dans chaque dispositif d'injection, la proportion de gaz par rapport à la charge d'hydrocarbures est de 1,5 à 10% en poids, par exemple de 2 à 5% en poids.

Le débit en charge d'hydrocarbures alimentant chaque dispositif d'injection peuvent avantageusement être contrôlé de manière à obtenir un débit surfacique de charge d'hydrocarbures au col allant de 1000 à 2000kg/m²/s, de préférence de 1400 à 1800 kg/m²/s. Ce contrôle peut être obtenu de manière classique au moyen de pompes, débitmètres ou autre.

La vitesse de la charge d'hydrocarbure au niveau de la zone de contact avec le gaz peut être de 0,4 à 0,6 m/s, par exemple de 0,5 m/s.

La vitesse de gaz entrant à la zone de contact avec l'hydrocarbure peut être de 100 à 200 m/s, par exemple de 150 m/s.

L'invention est maintenant décrite en référence aux dessins annexés, non limitatifs, dans lesquels :
- la figure 1 représente une vue en perspective d'un exemple de dispositif d'injection selon un mode de réalisation l'invention ;
- la figure 2A représente une vue de dessus de l'exemple de dispositif d'injection de la figure 1,
- les figures 2B et 2C représentent des vues en coupes suivant les axes respectifs A-A et B-B de la figure 2A, de l'exemple de dispositif d'injection des figures 1 et 2A ;
- la figure 3 représente la distribution de la taille moyenne des gouttelettes en fonction de la largeur de spray à une distance relative de l'orifice de sortie, pour un exemple d'injecteur selon un mode de réalisation de l'invention et pour un injecteur de référence qui comprend un venturi.
- la figure 4 représente une vue en perspective d'une pièce de l'exemple de dispositif d'injection des figures 1, 2A, 2B, 2C, à savoir un deuxième élément d'alimentation en gaz ; et
- la figure 5 représente très schématiquement un exemple de dispositif d'injection, selon un mode de réalisation de l'invention.

Par sensiblement parallèle, perpendiculaire, on entend une direction s'écartant d'au plus ±20°, voire d'au plus 10° ou d'au plus 5° d'une direction parallèle, perpendiculaire.

Des éléments similaires ou proches dans leur forme ou dans leur fonction peuvent être désignés par des références identiques d'une figure à l'autre.

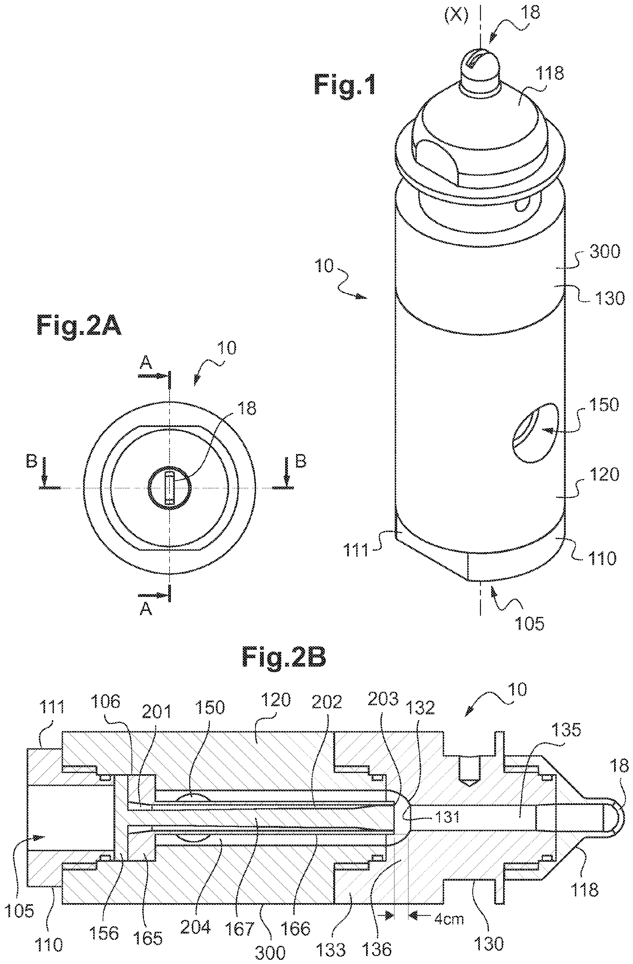

Les figures 1, 2A, 2B, 2C et 4 étant relatives au même mode de réalisation, elles seront commentées simultanément.

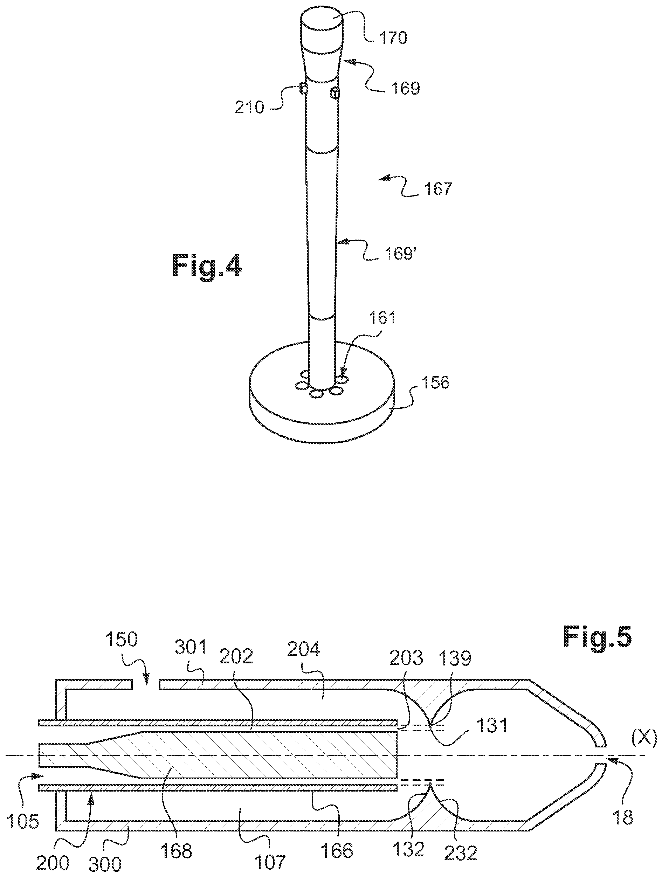

La figure 5 montre une représentation très schématique, afin de faciliter la compréhension de l'invention, d'un exemple de dispositif d'injection, selon un mode de réalisation de l'invention. Sur cette figure, les proportions ne sont pas forcément respectées.

En référence à cette figure 5, un dispositif d'injection 10, dit aussi injecteur, comprend un corps 300 dont les parois 301 définissent un évidement 107 s'étendant axialement, suivant l'axe (X). Le corps 300 peut être réalisé en une ou plusieurs pièces.

Un ensemble d'injection de gaz 200 est monté à une extrémité du corps 300. Cet ensemble définit un passage pour le gaz 202, depuis une entrée de gaz 105 ouverte à l'extérieur et vers une sortie de gaz 203 déboutant sur l'intérieur de l'évidement 107.

Du liquide est introduit par un orifice d'entrée de liquide 150 formé dans une paroi 301 du corps, de sorte que le liquide introduit dans l'injecteur 10 a une vitesse avec une composante radiale. Le liquide circule ensuite à l'intérieur d'un espace 204 entre les parois 301 et l'ensemble d'injection de gaz 200.

Les parois définissent un étranglement se terminant en une ligne bord vif 131, circulaire.

Plus précisément, la section de la cavité 107 en amont de la ligne de bord vif 131 diminue au fur et à mesure que l'on se rapproche de cette ligne 131. La section de la cavité 107 en aval de la ligne de bord vif 131 augmente au fur et à mesure que l'on s'éloigne de cette ligne 131. Alternativement, on pourrait prévoir que la section de la cavité 107 reste constante en aval de la ligne de bord vif, c'est-à-dire que l'évidement comprendrait une portion définissant un conduit cylindrique, la ligne de bord vif constituant la base de ce cylindre.

Le flux de gaz sous pression éjecté à la sortie de gaz 203 atteint une portion de paroi, ou zone, 139 dans un proche voisinage de la ligne de bord vif. Sans vouloir être liés par une théorie, il est possible que le film liquide passant à proximité du bord vif soit cisaillé par le jet gazeux, provoquant ainsi l'atomisation du liquide en gouttelettes.

L'ensemble d'injection comprend un tube cylindrique 166 et un élément de tige 168 reçu à l'intérieur de ce tube 166. Le gaz injecté à l'entrée de gaz 105 circule donc dans un passage 202 de section annulaire, entre deux enveloppes concentriques.

Dans le mode de réalisation représenté, le flux de gaz sous pression éjecté à la sortie de gaz 203 forme une lame à forme de cylindre.

Dans un mode de réalisation alternatif et non représenté l'ensemble d'injection pourrait être conformé que le flux de gaz ait une forme de portion de cône.

Cette lame est centrée sur une portion de paroi dans le voisinage du bord vif, par exemple une zone incluant le bord vif comme sur la figure 5.

Le flux de liquide atomisé et de gaz restant sont évacués par un orifice 18.

Les figures 1, 2A, 2B, 2C et 4 sont relatives à un mode de réalisation de l'invention ayant fait l'objet de tests.

Un dispositif d'injection 10 est destiné à atomiser un liquide en gouttelettes au moyen d'un gaz. Ce dispositif d'injection 10 comprend un embout 118 définissant un orifice de sortie 18 pour l'évacuation du liquide atomisé, monté sur un corps 300.

Ce corps 300 s'étend axialement suivant un axe (X) et présente une forme extérieure cylindrique sur la plus grande partie de sa longueur.

Le corps 300 définit un orifice d'entrée de gaz 105, opposé à l'orifice de sortie 18, et un orifice d'entrée du liquide 150, formé dans une paroi latérale du dispositif d'injection 10.

Le corps 300 est réalisé en plusieurs pièces, à savoir :
- un bouchon 110 dans lequel est défini un conduit traversant, par lequel passe le gaz entrant dans le dispositif d'injection 10, et présentant deux méplats 111,
- un premier élément d'alimentation de gaz 106, comprenant une base 165 et un tube cylindrique 166, cette base 165 et ce tube 166 définissant un conduit débouchant de part et d'autre de cet élément 106, le conduit ayant des parois légèrement évasées au niveau de la base 165,
- un deuxième élément d'alimentation en gaz 167, représenté seul sur la figure 7, et comprenant une base 156 et un élément de tige, dit partie à forme de tige, 168 reçu dans le conduit du premier élément d'alimentation de gaz 106,
- un élément d'alimentation en liquide 120, dans lequel est défini l'orifice d'entrée de liquide 150 ; cet élément 120 est monté sur le bouchon 110 et définit un conduit dans lequel sont reçus le premier et le deuxième éléments l'alimentation en gaz 106, 167,
- un convergent 130 monté sur l'élément d'alimentation en liquide 120, et sur lequel est monté l'embout 118, ce convergent définissant un conduit établissant une communication fluide entre le conduit de l'élément d'alimentation en liquide 120 et l'orifice de sortie 18.

Ces différentes pièces 110, 106, 120, 130, 118 peuvent être réalisées en acier ou autre, par usinage, ou autre.

La base 156 du deuxième élément d'alimentation en gaz 167 est maintenue contre le bouchon 110 par l'élément d'alimentation en liquide 120, et la base 165 du premier élément d'alimentation de gaz 106 est maintenue contre la base 156 par cet élément 120.

La base 156 définit un nombre d'orifices 161, par exemple six orifices, disposés de façon à assurer une communication fluide entre le conduit du bouchon 110 et l'intérieur du tube cylindrique 166.

Le gaz reçu à l'orifice d'entrée de gaz 105 et circulant dans ces orifices 161 passe ensuite dans un espace 201 entre les parois internes du conduit de la base 165 et les parois externes de la portion de la partie en forme de tige 168 reçue dans ce conduit de la base 165, puis dans un espace 202 entre les parois internes du tube cylindrique 166 et les parois externes de la portion de la partie en forme de tige 168. L'espace 202 débouche sur une sortie de gaz 203 de section annulaire.

Le gaz circule ainsi entre deux enveloppes. Le flux de gaz a une section relativement faible dans ces espaces 201, 202, de sorte que la vitesse du gaz est relativement élevée à la sortie de gaz 203.

En référence en particulier à la figure 4, la partie à forme de tige 168 présente sur une portion 169' un évasement très léger, de sorte que le diamètre de la section de la tige augmente très légèrement, sur cette portion de tige, au fur et à mesure que la distance par rapport à la base 156 s'accroit, et présente un évasement 169 plus accentué à proximité de l'extrémité 170 opposée à la base 156, toujours dans le sens d'une augmentation du diamètre de la section avec la distance par rapport à la base 156.

Ainsi, la section du passage 202 diminue-t-elle à proximité de la sortie de gaz 203. Le gaz éjecté peut ainsi avoir une vitesse particulièrement élevée.

La portion 169 évasée se terminant en amont de l'orifice de sortie de gaz 203, le gaz circulant dans l'ensemble d'injection de gaz passe donc, immédiatement avant son éjection via la sortie de gaz 203, par une zone annulaire, de section constante (à la précision d'usinage près) sur une portion de l'ensemble 200, et de très faible épaisseur, ici comprise entre 1 et 2 millimètres.

Des ergots 210 permettent d'assurer un positionnement central de la partie à forme de tige 168 dans le tube cylindrique 166.

Les parois internes du convergent 130 sont conformées pour présenter un bord vif annulaire 131. Plus précisément, le convergent définit une portion de rétrécissement 136 entre une portion 133, conformée pour coopérer avec l'élément d'alimentation en liquide 120, et une portion 134 définissant un conduit 135 cylindrique. Le bord vif 131 se situe à la jonction entre les parois internes 132 de la portion de rétrécissement 136 et les parois internes 137 du conduit cylindrique 135 de la portion 134.

Les parois internes 132 de la portion de rétrécissement 136 définissent une surface sphérique tronquée.

Le conduit 135 débouche sur un conduit légèrement évasé 138. Les parois du conduit 138 peuvent définir avec les parois du conduit 135 un angle d'environ 3,5°. Sans vouloir être liés par une théorie, il est possible que cet angle au sommet de l'orifice du convergent 130 permette d'éviter les décollements de fluide.

Le liquide reçu à l'entrée 150 circule dans un espace 204 entre les parois internes de l'élément d'alimentation en liquide 120 et les parois externes du tube cylindrique 166.

Le dispositif d'injection 10 est agencé pour que la sortie de gaz 203 soit en regard du bord vif 131, sur la totalité de la ligne de ce bord vif 131, de sorte que le flux de gaz à cette sortie de gaz 203 soit dirigé vers une portion de paroi dans un voisinage du bord vif, par exemple exactement sur le bord vif ou sur les parois à moins de 1 centimètre du bord vif, par exemple à moins de 1 millimètre du bord vif.

Sans vouloir être liés par une théorie, il est possible que :
- le liquide circulant dans l'espace 204 soit plaqué contre les parois de la portion de surface sphérique 132 par le flux d'air issu de la sortie de gaz 203, ce flux de forme cylindrique agissant comme une lame d'air empêchant le passage du fluide vers le centre, ou que ce liquide soit plaqué contre les parois du fait de la dépression dans l'espace 204 créée par le flux d'air, et/ou que
- le flux de gaz atteignant les parois internes dans le voisinage de la ligne de bord vif 131, par exemple l'extrémité des parois internes 132 et/ou l'extrémité des parois internes de la portion 134, tende à cisailler le film de liquide plaqué contre les parois internes dans cette zone, créant ainsi des gouttelettes de liquide et/ou tende à heurter le liquide avec une énergie cinétique suffisante pour que l'énergie liée à la collision disperse le liquide en gouttelettes de faibles dimensions.

Le gaz d'atomisation ainsi produit passe par le conduit 135 et est évacué via l'orifice 18.

Alternativement, dans un mode de réalisation non représenté, on pourrait prévoir une fraisure plutôt qu'une surface sphérique 132.

Il semble avantageux de prévoir une forme de surface en amont du bord vif telle que la vitesse d'un fluide plaqué contre cette surface ait une composante perpendiculaire à la direction d'écoulement du gaz, ici la direction axiale, relativement élevée. Le fait que les vitesses du liquide et du gaz soient relativement perpendiculaires entre elles pourrait favoriser le cisaillement au niveau de l'angle vif et/ou la formation de gouttelettes du fait de la conversion de l'énergie d'impact.

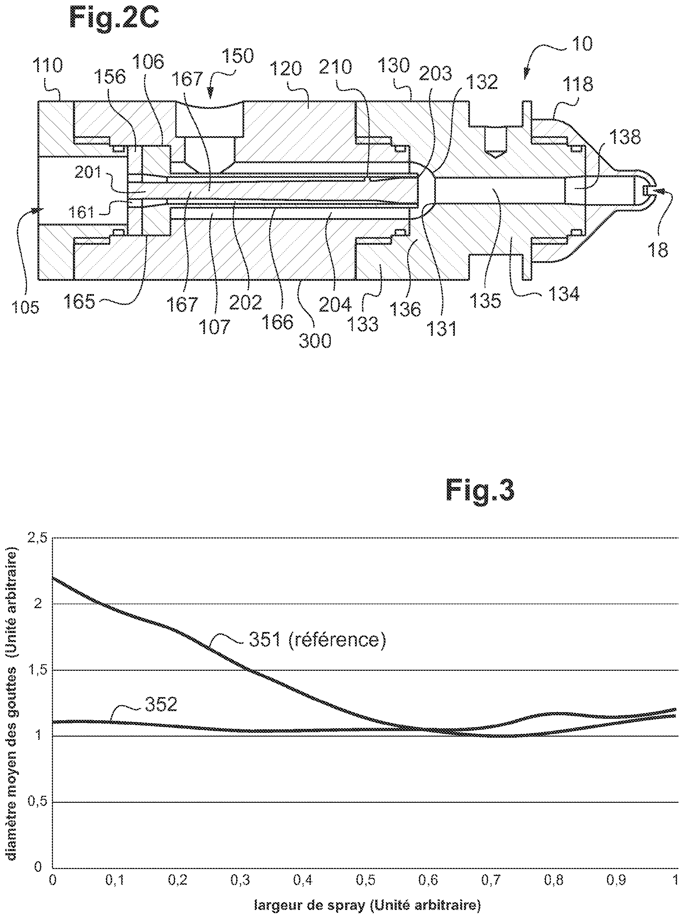

Les dimensions internes du dispositif d'injection représenté sur les figures 1, 2A, 2B, 2C sont similaires aux dimensions utilisées habituellement pour des dispositifs d'injection avec venturi. A titre d'exemple :
- Le diamètre de l'orifice d'entrée des gaz 105 peut être de 20 centimètres environ.
- Les bases 156 et 165 peuvent présenter un diamètre externe de 25 centimètres environ,
- les orifices 161 peuvent présenter un diamètre interne de 2,2 centimètres environ,
- La base 156 peut avoir une épaisseur de 4 centimètres environ,
- la partie à forme de tige 168 peut avoir une longueur de 77,4 centimètres environ, et la section de cette tige présenter un diamètre variant entre 4,5 centimètres environ, au niveau de la base 156, et 7,15 centimètres environ au niveau de l'extrémité 170, l'évasement 169 correspondant à une variation de diamètre de 5,5 centimètres environ à cette valeur d'extrémité de 7,15 centimètres environ.
- Le tube cylindrique peut avoir une longueur de 69,4 centimètres environ, un diamètre externe de 9,5 centimètres environ et définir un conduit de 7,5 centimètres environ de diamètre,
- La base 165 peut avoir une épaisseur (suivant la direction axiale X) de 8 centimètres environ, et le diamètre de la section du conduit formé dans cette base varier entre 9,22 centimètres environ et le diamètre du tube cylindrique 166, à savoir 7,5 centimètres environ.
- L'élément d'alimentation en liquide 120 peut avoir un diamètre externe de 50 centimètres environ et définir un conduit de 67 centimètres environ de long et de 16 centimètres environ de diamètre.
- L'orifice d'entrée de liquide 150 peut présenter un diamètre de 14 centimètres environ, et être disposé à 50-60 centimètres environ de l'extrémité de l'élément 120 destinée à être en contact avec le convergent 130,
- La portion 133 du convergent peut présenter une épaisseur (suivant la direction axiale X) de 10 centimètres environ,
- La portion de rétrécissement 136 du convergent peut présenter une épaisseur (suivant la direction axiale X) de 6 centimètres environ,
- La portion 134 du convergent peut définir un conduit cylindrique 135 de 36 centimètres environ de long et un conduit légèrement évasé 138 de 6 centimètres environ de long, le diamètre du conduit 135 étant de 7,3 centimètres environ, et le diamètre à la sortie du conduit 138 étant de 8 centimètres.

L'extrémité du dispositif d'injection 10 par laquelle sort le spray de liquide atomisé est généralement arrondie, par exemple sphérique. L'orifice de sortie 18 de cette extrémité peut présenter une forme similaire aux formes des dispositifs d'injection à impact classiques et peut être choisi en fonction de la forme de spray recherché. Il peut s'agir d'un orifice cylindrique, tronconique, d'une fente, ou autre.

### EXEMPLE :

Un dispositif d'injection similaire à celui décrit en référence aux figures 1, 2A, 2B, 2C et 4 a été réalisé avec des dimensions 10 fois plus faibles que les dimensions décrites ci-dessus.

Le liquide choisi pour un tel test est de l'eau, le gaz étant de l'air.

Le dispositif d'injection testé présente en particulier les dimensions suivantes :
- épaisseur (suivant une direction radiale) de l'espace 204 du trajet d'écoulement de liquide : entre 3 et 3,5 millimètres pour cette réalisation au 1/10ème, ce qui correspondrait à une épaisseur de 3-4 centimètres,
- longueur du trajet d'écoulement de liquide entre l'entrée 150 et l'extrémité du tube cylindrique 166 : entre 50 et 60 millimètres, ce qui correspondrait à une longueur entre 50 et 60 centimètres,
- épaisseur (suivant une direction radiale) de l'espace 204 du trajet d'écoulement de gaz avant éjection par la sortie 203 : entre 1, 5 millimètres au niveau de la base 165 et environ 0,17 millimètres au niveau de la sortie 203, toujours pour cette réalisation au 1/10^{ème},
- diamètre du conduit cylindrique 135 du convergent : 7,30 millimètres, toujours pour cette réalisation au 1/ 10^{ème},
- orifice de sortie : fente d'épaisseur 2,52 mm pour ce prototype au 1/10ème et d'amplitude angulaire d'ouverture de 105° (fente réalisée sur une extrémité sphérique de rayon externe de 5,6 mm pour ce prototype).

Les conditions de test sont les suivantes, pour cette réalisation au 1/10^{ème}, :
- Débit d'eau : 226, 2 kg/h,
- Débit de l'air : 9 kg/h,
- Ratio gaz/liquide : 4% en poids.

### Mesure de la perte de charge

Le dispositif d'injection testé diffuse dans de l'air ambiant. Par conséquent, la pression de liquide à l'entrée est égale à la chute de pression. La mesure a été effectuée au moyen d'un manomètre mesurant la pression en entrée.

La pression de liquide à l'entrée a été mesurée à 1,3 barg pour le dispositif d'injection. La perte de charge est donc relativement faible.

### Mesure de la taille des gouttelettes et de leur répartition

La figure 3 est un graphique avec en abscisse, une valeur d'angle de mesure, par rapport à l'orifice de sortie de liquide atomisé de dispositif d'injection, sans dimensions, et en ordonnée, des valeurs, également sans dimensions, de diamètre moyen de gouttelettes mesurées à 30 centimètres de cet orifice, à ces valeurs d'angle.

La courbe 351 correspond aux valeurs obtenues avec un prototype au 1/ 10ème d'un dispositif d'injection de référence, avec un venturi.

La courbe 352 correspond aux valeurs obtenues avec le prototype, réalisé au 1/ 10^{ème} de dispositif d'injection des figures 1, 2A, 2B et 2C.

Comme on peut le constater, avec le prototype du dispositif d'injection des figures 1, 2A, 2B et 2C, les gouttes ont un diamètre moyen variant relativement peu avec l'angle de spray.

Ce diamètre moyen se situe aux alentours de 100 microns.

En conclusion, le dispositif d'injection décrit- ci-dessus permet d'obtenir un spray de gouttelettes relativement fines, avec une distribution relativement uniforme, une perte de charge considérablement réduite, permettant le traitement de charges lourdes sans avoir à utiliser des pompes puissantes ou une quantité de vapeur trop élevée.

## Revendications

1. Dispositif d'injection (10) conformé pour atomiser un liquide en gouttelettes au moyen d'un gaz, comprenant :
un corps (300) comprenant des parois (301) définissant un évidement (107) s'étendant axialement de façon à déboucher d'une part vers un orifice d'entrée de gaz (105) à une extrémité du dispositif d'injection (10) et d'autre part vers un orifice de sortie de liquide atomisé (18) à l'autre extrémité dudit dispositif d'injection, et un orifice d'entrée de liquide (150) étant ménagé dans lesdites parois, ledit orifice d'entrée de liquide s'étendant suivant une composante radiale de façon à déboucher d'une part sur l'extérieur du corps (300) et d'autre part sur l'évidement (107),
un ensemble d'injection de gaz (200) dans lequel est défini un passage (202) pour la circulation de gaz entre l'orifice d'entrée de gaz (105) et un orifice de sortie de gaz (203) situé à l'intérieur de l'évidement (107),
dans lequel
- les parois internes du corps (300) définissent un étranglement dont le col (131) est en aval de l'orifice de sortie de gaz (203),
- l'ensemble d'injection de gaz (200) définit avec les parois un espace (204) pour la circulation de liquide de l'orifice d'entrée de liquide (150) vers le col (131) de l'étranglement, et
- le dispositif d'injection (10) est agencé de sorte que le flux de gaz issu de l'orifice de sortie de gaz (203) couvre une portion de paroi (139) dans un proche voisinage du col (131) de l'étranglement.

2. Dispositif d'injection (10) selon la revendication 1, dans lequel l'orifice de sortie de gaz (203) est une fente en regard du col (131), de sorte que le flux de gaz est circonscrit dans le proche voisinage dudit col.

3. Dispositif d'injection (10) selon la revendication 2, dans lequel le col (131) et la fente de l'orifice de sortie de gaz (203) ont des formes circulaires.

4. Dispositif d'injection (10) selon l'une quelconque des revendications 2 à 3, dans lequel l'ensemble d'injection de gaz (200) comprend un tube (166) et un élément de tige (168) reçu dans ledit tube, ledit élément de tige s'étendant longitudinalement à l'intérieur dudit tube de sorte que le passage (202) pour la circulation de gaz soit entre ledit élément de tige et ledit tube.

5. Dispositif d'injection (10) selon la revendication 4, dans lequel au moins l'un parmi l'élément de tige (168) et le tube (166) est conformé de sorte que l'épaisseur du passage (202) pour la circulation de gaz subisse un rétrécissement afin d'accélérer la vitesse du gaz entre l'entrée de gaz (105) et la sortie de gaz (203).

6. Dispositif d'injection (10) selon l'une quelconque des revendications 1 à 5, dans lequel le col est une ligne de bord vif (131).

7. Dispositif d'injection (10) selon l'une quelconque des revendications 1 à 6, dans lequel le corps définit un conduit cylindrique (135) en aval du col (131).

8. Dispositif d'injection (10) selon la revendication 7, dans lequel le conduit cylindrique (135) s'étend axialement sur une longueur de valeur au moins quatre fois plus élevée que la valeur d'un diamètre de la section dudit conduit.

9. Dispositif d'injection (10) selon l'une quelconque des revendications 1 à 8, dans lequel l'évidement présente un léger évasement (138) en aval de l'étranglement.

10. Réacteur de traitement d'une charge d'hydrocarbures, notamment de craquage catalytique, comprenant au moins un dispositif d'injection (10) selon l'une des revendications 1 à 9 disposé de sorte que son orifice de sortie de liquide atomisé (18) débouche à l'intérieur dudit réacteur.

11. Procédé de craquage catalytique d'une charge d'hydrocarbures dans un réacteur, dans lequel on injecte, de préférence en continu, ladite charge d'hydrocarbures à l'intérieur dudit réacteur, ladite charge d'hydrocarbures étant injectée par un conduit d'entrée de liquide raccordé à l'orifice d'entrée de liquide d'un dispositif d'injection (10) selon l'une des revendications 1 à 9, un gaz alimentant ledit dispositif d'injection (10) par l'orifice d'entrée de gaz (105).

12. Procédé de craquage catalytique selon la revendication 11, dans lequel les débits en charge d'hydrocarbures et en gaz alimentant le dispositif d'injection (10, 10') sont contrôlés de manière à obtenir un débit surfacique de charge d'hydrocarbures au col du dispositif d'injection allant de 1000 à 2000kg/m²/s, de préférence de 1400 à 1800 kg/m²/s.

## Patentansprüche

1. Injektionsvorrichtung (10), die ausgebildet ist, um eine Flüssigkeit mit Hilfe eines Gases in Tröpfchen zu zerstäuben umfassend:
einen Körper (300), umfassend Wände (301), die eine Aussparung (107) definieren, die sich axial derart erstreckt, dass sie einerseits hin zu einer Öffnung zum Eintritt von Gas (105) an einem Ende der Injektionsvorrichtung (10) und andererseits hin zu einer Öffnung zum Austritt von zerstäubter Flüssigkeit (18) am anderen Ende der Injektonsvorrichtung mündet, und wobei eine Öffnung zum Eintritt von Flüssigkeit (150) in den Wänden angebracht ist, wobei sich die Öffnung zum Eintritt von Flüssigkeit gemäß einer radialen Komponente erstreckt, um einerseits auf der Außenseite des Körpers (300) und andererseits auf der Aussparung (107) zu münden,
eine Gasinjektionseinheit (200), in der ein Durchgang (202) zur Zirkulation von Gas zwischen der Öffnung zum Eintritt von Gas (105) und einer Öffnung zum Austritt von Gas (203), die sich im Inneren der Aussparung (107) befindet, definiert ist,
wobei
- die internen Wände des Körpers (300) eine Einschnürung definieren, deren Hals (131) nachgelagert von der Öffnung zum Austritt von Gas (203) ist,
- die Gasinjektionseinheit (200) mit den Wänden einen Raum (204) für die Zirkulation von Flüssigkeit von der Öffnung zum Eintritt von Flüssigkeit (150) hin zum Hals (131) der Einschnürung definiert, und
- die Injektionsvorrichtung (10) derart angeordnet ist, dass der Gasfluss, der aus der Öffnung zum Austritt von Gas (203) stammt, einen Wandabschnitt (139) in einer engen Nachbarschaft zum Hals (131) der Einschnürung abdeckt.

2. Injektionsvorrichtung (10) nach Anspruch 1, wobei die Öffnung zum Austritt von Gas (203) ein Schlitz gegenüber dem Hals (131) ist, so dass der Gasfluss in der engen Nachbarschaft des Halses abgegrenzt ist.

3. Injektionsvorrichtung (10) nach Anspruch 2, wobei der Hals (131) und der Schlitz der Öffnung zum Austritt von Gas (203) kreisförmig sind.

4. Injektionsvorrichtung (10) nach einem beliebigen der Ansprüche 2 bis 3, wobei die Gasinjektionseinheit (200) ein Rohr (166) und ein Stiftelement (168) umfasst, das in dem Rohr aufgenommen ist, wobei sich das Stiftelement längs gerichtet im Inneren des Rohrs erstreckt, so dass der Durchgang (202) für die Zirkulation von Gas zwischen dem Stiftelement und dem Rohr ist.

5. Injektionsvorrichtung (10) nach Anspruch 4, wobei mindestens eines des Stiftelements (168) und des Rohrs (166) derart ausgebildet ist, dass die Dicke des Durchgangs (202) für die Zirkulation von Gas einer Verengung unterzogen wird, um die Geschwindigkeit des Gases zwischen dem Eintritt von Gas (105) und dem Austritt von Gas (203) zu erhöhen.

6. Injektionsvorrichtung (10) nach einem beliebigen der Ansprüche 1 bis 5, wobei der Hals eine Linie mit scharfem Rand (131) ist.

7. Injektionsvorrichtung (10) nach einem beliebigen der Ansprüche 1 bis 6, wobei der Körper eine zylindrische Leitung (135) nachgelagert vom Hals (131) definiert.

8. Injektionsvorrichtung (10) nach Anspruch 7, wobei sich die zylindrische Leitung (135) axial auf einer Länge mit einem Wert erstreckt, der mindestens viermal höher als der Wert eines Durchmessers des Schnitts der Leitung ist.

9. Injektionsvorrichtung (10) nach einem beliebigen der Ansprüche 1 bis 8, wobei die Aussparung eine leichte Erweiterung (138) nachgelagert von der Einschnürung aufweist.

10. Reaktor zur Behandlung einer Kohlenwasserstoffzufuhr, insbesondere mit katalytischem Cracken, umfassend mindestens eine Injektionsvorrichtung (10) nach einem der Ansprüche 1 bis 9, die derart angeordnet ist, dass ihre Öffnung zum Austritt von zerstäubter Flüssigkeit (18) im Inneren des Reaktors mündet.

11. Verfahren zum katalytischen Cracken einer Kohlenwasserstoffzufuhr in einem Reaktor, wobei, vorzugsweise kontinuierlich, die Kohlenwasserstoffzufuhr in das Innere des Reaktors injiziert wird, wobei die Kohlenwasserstoffzufuhr durch eine Leitung zum Eintritt von Flüssigkeit injiziert wird, die mit der Öffnung zum Eingang von Flüssigkeit einer Injektionsvorrichtung (10) nach einem der Ansprüche 1 bis 9 verbunden ist, wobei ein Gas die Injektionsvorrichtung (10) durch die Öffnung zum Eintritt von Gas (105) versorgt.

12. Verfahren zum katalytischen Cracken nach Anspruch 11, wobei die Durchsätze von Kohlenwaserstoffzufuhr und von Gas, die die Injektionsvorrichtung (10, 10') versorgen, derart gesteuert werden, dass ein Oberflächendurchsatz von Kohlenwasserstoffzufuhr am Hals der Injektionsvorrichtung erhalten wird, der von 1000 bis 2000 kg/m²/s, vorzugsweise von 1400 bis 1800 kg/m²/s reicht.

## Claims

1. An injection device (10) that is shaped for atomising droplets of a liquid by means of a gas, comprising:
a body (300) comprising walls (301) defining a recess (107) extending axially so as to open to a gas inlet opening (105) at one end of the injection device (10) and to an atomised liquid outlet opening (18) at the other end of said injection device, and a liquid inlet opening (150) being arranged in said walls, the liquid inlet opening extending along a radial component in such a way as to open to the outside of the body (300) as well as into the recess (107),
a gas injection assembly (200), wherein a channel (202) is defined for the circulation of gas between the gas inlet opening (105) and a gas outlet opening (203) located inside the recess (107),
wherein
- the internal walls of the body (300) define a constriction having a neck (131) downstream from the gas outlet opening (203),
- the gas injection assembly (200) together with the walls, defines a space (204) for the circulation of liquid from the liquid inlet opening (150) to the neck (131) of the constriction, and
- the injection device (10) is arranged such that the flow of gas coming from the gas outlet opening (203) covers a portion of wall (139) in a close vicinity of the neck (131) of the constriction.

2. The injection device (10) according to claim 1, wherein the gas outlet opening (203) is a slot facing the neck (131), such that the gas flow is constricted in the close vicinity of the neck.

3. The injection device (10) according to claim 2, wherein the neck (131) and the slot of the gas outlet opening (203) are circular in shape.

4. The injection device (10) according to any one of claims 2 and 3, wherein the gas injection assembly (200) comprises a tube (166) and a rod element (168) received in said tube, the rod element extending longitudinally inside the tube such that the channel (202) for circulation of gas is between the rod element and the tube.

5. The injection device (10) according to claim 4, wherein at least one from among the rod element (168) and the tube (166) is shaped such that the thickness of the channel (202) for the circulation of gas undergoes a narrowing in order to accelerate the gas velocity between the gas inlet (105) and the gas outlet (203).

6. The injection device (10) according to any one of claims 1 to 5, wherein the neck is a sharp edge line (131).

7. The injection device (10) according to any one of claims 1 to 6, wherein the body defines a cylindrical duct (135) downstream of the neck (131).

8. The injection device (10) according to claim 7, wherein the cylindrical duct (135) extends axially over a length of value at least four times higher than the value of a diameter of the cross-section of said duct.

9. The injection device (10) according to any one of claims 1 to 8, wherein the recess has a gentle flaring (138) downstream of the constriction.

10. A reactor for treating a hydrocarbon load, in particular for catalytic cracking, comprising at least one injection device (10) according to one of claims 1 to 9, arranged such that its atomised liquid outlet (18) opens to the inside of said reactor.

11. A method for catalytic cracking of a load of hydrocarbons in a reactor, wherein said hydrocarbon load is injected, preferably continuously, into the inside of the reactor, the hydrocarbon load being injected via a liquid inlet duct connected to the liquid inlet opening of an injection device (10) according to one of claims 1 to 9, a gas supplying said injection device (10) via the gas inlet opening (105).

12. The catalytic cracking method according to claim 11, in which the flow rates of hydrocarbon load and of the gas supplying the injection device (10, 10') are controlled in such a way as to obtain a surface flow rate of hydrocarbon load at the neck of the injection device of between 1000 and 2000 kg/m²/s, preferably between 1400 and 1800 kg/m²/s.
